# FASCICULE DE BREVET EUROPEEN

(11) **EP 3 017 008 B1**
(45) Date de publication et mention de la délivrance du brevet: **20.01.2021**
(21) Numéro de dépôt: 14738759.1
(22) Date de dépôt: 26.06.2014
(51) Int. Cl.: C09D 11/00, C09D 11/02, C09D 11/037, C09D 11/322, C09D 11/52

(54) **FORMULATIONS D'ENCRES A BASE DE NANOPARTICULES**
NANOPARTIKEL ENTHALTENDE TINTENZUSAMMENSETZUNG
INK COMPOSITIONS COMPRISING NANOPARTICLES

(30) Priorité: 03.07.2013 FR 1301570
(43) Date de publication de la demande: 11.05.2016
(73) Titulaire: Genes'Ink SA, 13790 Rousset (FR)
(72) Inventeur: PIETRI, Emmanuelle, 13790 Peynier (FR); EL QACEMI, Virginie, F-13360 Roquevaire (FR); KAUFFMAN, Louis Dominique, 83260 La Crau (FR); VERSINI, Corinne, F-13100 Aix en Provence (FR); DIDANE, Yahia, F-83100 Toulon (FR)
(74) Mandataire: De Kezel, Eric
(86) Numéro de dépôt international: PCT/EP2014/063592
(87) Numéro de publication internationale: WO 2015/000796

(56) Documents cités:
- WO-A1-2009/017648
- WO-A1-2010/056826
- CN-A- 102 602 983
- US-A1- 2007 144 305

## Description

La présente invention a pour objet des formulations d'encres à base de nanoparticules (semi-)conductrices. En particulier, la présente invention concerne des compositions d'encre à base de nanoparticules (semi-)conductrices adaptées pour différentes méthodes d'impression.

Plus particulièrement, la présente invention se rapporte au domaine des encres à base de nanoparticules (semi-)conductrices adaptées pour de nombreuses méthodes d'impression. On citera à titre d'exemples non limitatifs les méthodes d'impression suivantes : jet d'encre, spray, sérigraphie, héliogravure, flexographie, doctor blade, spin coating, et slot die coating.

Les encres à base de nanoparticules (semi-)conductrices selon la présente invention peuvent être imprimées sur tous types de supports. On citera à titre d'exemple les supports suivants : polymères et dérivés de polymères, matériaux composites, matériaux organiques, matériaux inorganiques. Notamment les supports utilisés dans le domaine de l'électronique imprimée, à titre d'exemple, le PET, PEN, Polyimide, le verre, PET/ITO,verre /ITO, les polycarbonates, les PVC ainsi que tous type de couches actives utilisées dans les dispositifs optoélectroniques.

Les encres à base de nanoparticules (semi-)conductrices selon la présente invention présentent de nombreux avantages parmi lesquels nous citerons à titre d'exemples non limitatifs :
- une stabilité dans le temps supérieure aux encres actuelles ; à titre d'exemple, leur stabilité au stockage à température ambiante est largement supérieure à 6 mois ;
- une versatilité quant à leur domaine d'application ; à titre d'exemples préférés, nous citerons l'optoélectronique, le photovoltaïque et la sécurité ;
- une non-toxicité des solvants et des nanoparticules ;
- une conservation des propriétés intrinsèques des nanoparticules ; et, en particulier,
- une conservation des propriétés électroniques :

L'encre à base de ZnO selon la présente invention, une fois déposée est caractérisée par son travail de sortie ou WF. Le travail de sortie est l'énergie nécessaire à un électron pour passer du niveau de fermi au niveau du vide.

Celui obtenu selon la présente invention est stable et constant avec la température et quel que soit le support sur lequel l'encre est déposée. La valeur mesurée moyenne est de préférence de l'ordre de 3,9 +/- 0,5 eV compatible pour l'utilisation entre autre de couche d'injection d'électron dans les dispositifs optoélectroniques et photovoltaïques. Son utilisation comme couche d'injection d'électron dans une cellule photovoltaïque organique permet une amélioration substantielle du rendement par rapport à l'utilisation de LiF déposé par CVD.
- une conservation des propriétés de fluorescence.

La présente invention se rapporte également à une méthode de préparation améliorée des dites encres ; enfin, la présente invention se rapporte aussi à l'utilisation des dites encres dans les domaines dits de la « sécurité », du photovoltaïque, des capteurs (par exemple des capteurs de gaz), des dalles tactiles, des biocapteurs, et des technologies sans contact (« contactless technologies »).

A la vue de la littérature de ces dernières années, les nanocristaux colloïdaux semi-conducteurs ont reçu beaucoup d'attention grâce à leurs nouvelles propriétés optoélectroniques, photovoltaïques et catalytiques. Cela les rend particulièrement intéressants pour de futures applications dans le domaine de la nanoélectronique, des cellules solaires, des capteurs et du biomédical.

Le développement de nanoparticules semi-conductrices permet de recourir à de nouvelles mises en œuvre et d'entrevoir une multitude de nouvelles applications. Les nanoparticules possèdent un rapport surface / volume très important et la substitution de leur surface par des tensioactifs entraîne le changement de certaines propriétés, notamment optiques, et la possibilité de les disperser.

Leurs faibles dimensions peuvent amener dans certains cas des effets de confinement quantique. Les nanoparticules peuvent être des billes (de 1 à 100 nm), des bâtonnets (L < 200 à 300 nm), des fils (quelques centaines de nanomètres voire quelques microns), des disques, des étoiles, des pyramides, des tétrapodes ou des cristaux lorsqu'ils n'ont pas de forme prédéfinie.

Plusieurs procédés ont été élaborés afin de synthétiser des nanoparticules semi-conductrices. Parmi eux, on peut citer de façon non exhaustive :
- les procédés physiques :
   ■ la déposition de vapeur chimique (aussi connue sous la dénomination « Chemical Vapor Deposition - CVD ») lorsqu'un substrat est exposé à des précurseurs chimiques volatilisés qui réagissent ou se décomposent sur sa surface. Ce procédé conduit généralement à la formation de nanoparticules dont la morphologie dépend des conditions utilisées ;
   ■ l'évaporation thermique ;
   ■ l'épitaxie par jets moléculaires (aussi connue sous la dénomination « Molecular Beam Epitaxy ») lorsque des atomes qui vont constituer les nanoparticules sont bombardés à grande vitesse sur le substrat (ou ils vont se fixer), sous la forme d'un flux gazeux ;
      - les procédés chimiques ou physico-chimiques :
         ■ la microémulsion ;
         ■ l'impulsion laser en solution, lorsqu'une solution contenant un précurseur est irradiée par faisceau laser. Les nanoparticules se forment dans la solution le long du faisceau lumineux ;
         ■ La synthèse par irradiation aux microondes ;
         ■ La synthèse orientée assistée par des surfactants ;
         ■ La synthèse sous ultrasons ;
         ■ La synthèse électrochimique ;
         ■ La synthèse organométallique ;
         ■ La synthèse en milieu alcoolique.

Les synthèses physiques nécessitent généralement des températures élevées ce qui les rend peu attractives pour le passage à une production à l'échelle industrielle. De plus, cela les rend non adaptées à certains substrats, par exemple les substrats souples.

Les synthèses chimiques quant à elles possèdent un avantage majeur pour l'élaboration de nanoparticules : les nanoparticules semi-conductrices sont dispersées dans des solvants et, dans la plupart des cas, ne sont pas fixées au substrat. Enfin, elles permettent de contrôler la forme des nanoparticules. WO010/056286 A1 divulgue une composition d'encre à base d'aluminium pour la fabrication d'une électrode dans une cellule solaire, comprenant : des nanoparticules d'oxyde de zinc ; de l'acétate de butoxyéthyle ; de l'alcool benzylique ; Disperbyk 111 comme dispersant.

La présente invention a pour objectif de palier un ou plusieurs inconvénients de l'art antérieur en fournissant une encre stable, versatile et améliorée, et qui permet de conserver les caractéristiques intrinsèques des nanoparticules, en particulier leur propriété de fluorescence et leurs propriétés électroniques.

La présente invention est définie par les revendications. Selon un mode d'exécution de la présente invention, cet objectif est atteint grâce à une encre dont la composition comprend au moins :
a. un composé « a » consistant en des nanoparticules conductrices et/ou semiconductrices qui consistent en des oxydes métalliques et qui contiennent de 5 % à 15% en poids de ligands acétates, b. un composé « b » consistant en un solvant alcool sélectionné parmi les alcools monohydriques aliphatiques ou leurs mélanges, c. un composé « c » consistant en un co-solvant alcool différent du composé « b » et sélectionné parmi les alcools monohydriques insaturés ou leurs mélanges, d. un composé « d » consistant en un dispersant, et e. un composé « e » optionnel consistant en un épaississant ou stabilisant.

La viscosité de l'encre selon la présente invention est de préférence comprise entre 1 et 500 mPa.s ; la viscosité de l'encre selon la présente invention est de préférence comprise entre 1 et 50 mPa.s, par exemple entre 8 et 40 mPa.s ; ces deux dernières gammes de viscosité étant préférées en l'absence de composé « e ». Cette viscosité peut être avantageusement mesurée selon la méthode suivante :
Appareil : Rhéomètre AR-G2 de TA Instrument
Temps de conditionnement : 1 min
Type de test : Rampe continue
Rampe : Vitesse de cisaillement (1/s)
De : 0.001 à 40 (1/s)
Durée : 10 min
Mode : linéaire
Mesure : toutes les 10 secondes
Température : 20°C
Méthode de retraitement de la courbe : Newtonien
Zone retraitée : toute la courbe

Le composé « a » selon la présente invention consiste donc en des nanoparticules. Selon une variante de réalisation de la présente invention, les objectifs de la présente invention sont particulièrement bien atteints lorsque le composé « a » est constitué de nanoparticules d'oxyde métallique, plus particulièrement de nanoparticules d'oxyde de zinc.

Selon une variante de réalisation de la présente invention, les nanoparticules ont des dimensions comprises entre 1 et 50 nm, de préférence entre 2 et 20 nm.

Selon une variante de réalisation de la présente invention, les nanoparticules sont de forme sphéroïdale et/ou sphérique. Pour la présente invention et les revendications qui suivent, le terme « de forme sphéroïdale » signifie que la forme ressemble à celle d'une sphère mais elle n'est pas parfaitement ronde (« quai-sphérique »), par exemple une forme ellipsoïdale. La forme des nanoparticules est généralement identifiée au moyen de photographies prises par microscope. Ainsi, selon cette variante de réalisation de la présente invention, les nanoparticules ont des diamètres compris entre 1 et 50 nm, de préférence entre 2 et 20 nm.

Selon un mode d'exécution particulier de la présente invention, les nanoparticules d'oxyde métallique utilisées ont été préalablement synthétisées par synthèse chimique. Toute synthèse chimique peut être préférentiellement utilisée dans le cadre de la présente invention. A titre d'exemple, on citera une synthèse chimique qui utilise comme précurseur de l'acétate de zinc [Zn(CH3COO)2]. En général, le précurseur est dissout dans du méthanol ; après chauffage de cette solution, on y ajoute une solution d'hydroxyde de potassium (KOH) et/ou d'hydroxyde de sodium (NaOH) ce qui permet d'obtenir les nanoparticules désirées. En général, les nanoparticules sont ensuite soumises à un lavage qui permet d'éliminer tout ce qui n'est pas chimiquement ou physiquement lié aux nanoparticules.

Toutefois, la Demanderesse a découvert de manière inattendue que les compositions d'encre comprenant des nanoparticules synthétisées à partir du précurseur acétate de zinc présentaient des propriétés améliorées. Bien que ne voulant pas être limitée par cette explication, la Demanderesse pense que cette amélioration pourrait provenir de la présence de ligands acétates qui proviennent du précurseur et qui restent liés aux nanoparticules.

Selon un mode d'exécution particulier de la présente invention, les nanoparticules synthétisées par synthèse chimique selon la présente invention contiennent de 5 % à 15% en poids de ligands acétates, de préférence entre 7 et 14%, par exemple entre 8 et 12% en poids de ligands acétates. Cette teneur en ligand acétate dans la nanoparticule peut être avantageusement mesurée selon la méthode suivante :
Analyse thermogravimétrique
Appareil : TGA Q50 de TA Instrument
Creuset : Alumine
Méthode : rampe
Plage de mesure : de température ambiante à 600°C
Montée en température : 10°C/min

Un exemple particulier de synthèse de nanoparticules selon la présente invention est décrit à titre illustratif ci-après : on effectue dans un récipient un mélange sous agitation magnétique d'hydroxyde de potassium et de méthanol jusqu'à obtention d'une fine dispersion. Dans un autre récipient, on dissout sous agitation magnétique et à température ambiante de l'acétate de zinc dans un mélange de méthanol et d'eau. On ajoute ensuite goutte à goutte la solution d'hydroxyde de potassium à la solution d'acétate de zinc sous atmosphère inerte et à 60°C sous agitation magnétique ce qui permet (après décantation et lavage) d'obtenir les nanoparticules d'oxyde de zinc. Cette synthèse permet l'obtention de nano sphères d'oxyde de zinc avec une distribution de tailles de particules bien contrôlée ; on peut ainsi obtenir, en fonction de la durée des étapes de synthèse, des nanoparticules sphériques ayant un diamètre qui peut varier de 2 à 10 nm.

Le composé « b » selon la présente invention consiste donc en un solvant alcool sélectionné parmi les alcools monohydriques aliphatiques ou leurs mélanges ; de préférence parmi les alcools monohydriques aliphatiques paraffiniques primaires ayant moins de 10 atomes de carbone. On citera à titre d'exemple l'éthanol, l'isopropanol et/ou le butanol, de préférence le n-butanol.

Le composé « c » selon la présente invention consiste donc en un solvant alcool différent du composé « b ».

L'alcool est sélectionné parmi les alcools monohydriques insaturés ou leurs mélanges. On citera à titre d'exemple les alcools terpéniques, de préférence le terpinéol, de préférence l'alpha-terpinéol.

Le composé « d » selon la présente invention consiste donc en un dispersant. Au-delà de sa fonction de dispersant qui est donc différente de la fonction de solvant des composés « b » et « c » précités, le composé « d » est différent des composés « b » et « c » utilisés dans la composition. Ce dispersant peut avantageusement être sélectionné parmi les familles des alcool-amines et des polyalcools, ou leur mélange. On citera à titre d'exemple d'alcool-amines, la diméthanolamine, la diéthanolamine et/ou l'éthanolamine et/ou leur mélange, de préférence l'éthanolamine. On citera également à titre d'exemple de polyalcools, l'éthylène glycol, le diéthylène glycol, le propylène glycol et/ou leur mélange, de préférence l'éthylène glycol.

Le composé « e » optionnel selon la présente invention consiste donc en un agent épaississant ou stabilisant. Au-delà de sa fonction d'épaississant ou de stabilisant qui est donc différente des fonctions de dispersant du composé « d » et de solvant des composés « b » et « c » précités, le composé « e » est différent des composés « b » « c » et « d » utilisés dans la composition. On citera à titre d'exemple les alkyle-cellulosc, de préférence l'éthylcellulose, et les urées modifiées, de préférence les polyurées, et/ou leurs mélanges.

Selon un mode d'exécution de la présente invention, l'encre comprend
- un composé « a » dans une teneur comprise entre 0,1 et 15% en poids, de préférence inférieure à 15% en poids, de préférence entre 0,5 et 8 % en poids, par exemple entre 0,5 et 2 % en poids,
- un composé « b » dans une teneur comprise entre 9 et 99 % en poids, de préférence entre 9 et 50 % en poids,
- un composé « c » dans une teneur comprise entre 0,5 et 90 % en poids, de préférence supérieure à 5 % en poids, de préférence supérieure à 15% en poids, de préférence entre 50 et 90 % en poids,
- un composé « d » dans une teneur inférieure à 5 % en poids, de préférence entre 0,05 et 2 % en poids, et
- un composé « e » optionnel dans une teneur inférieure à 4 % en poids, de préférence entre 0,5 et 2 % en poids.

Selon un mode d'exécution de la présente invention, l'encre peut également intégrer dans sa composition d'autres composés parmi lesquels nous citerons à titre d'exemple des solvants (par exemple de l'eau, des alcools) et/ou des agents tensio-actifs, et/ou des polymères.

Toutefois, les composés « a », « b », « c », « d » et « e » (dans les gammes de proportions indiquées ci-dessus) constitueront de préférence au moins 50% en poids de l'encre finale, de préférence au moins 75% en poids, par exemple au moins 90% en poids, au moins 95% en poids, au moins 99% en poids, ou même 100% en poids de l'encre finale.

La présente invention concerne également un procédé de préparation d'une formulation d'encre selon la présente invention, procédé comprenant les étapes suivantes :
a) mélange des nanoparticules (composé « a ») avec le solvant (composé « b ») sous agitation,
b) ajout au dit mélange de l'étape précédente de l'agent dispersant (composé « d ») et du composé « c » et agitation, et
c) optionnellement, mélange entre le mélange obtenu à l'étape b) et le composé « e » (ce mélange pouvant s'effectuer par addition du composé « e » dans le mélange obtenu à l'étape b, ou addition du mélange obtenu à l'étape b dans le composé « e »), et agitation, et
d) obtention d'une encre.

Une alternative à ce procédé de préparation d'une formulation d'encre selon la présente invention, lorsque le composé optionnel « e » est présent, comprend de préférence les étapes suivantes :
a) mélange des nanoparticules (composé « a ») avec le solvant (composé « b ») sous agitation,
b) ajout au dit mélange de l'étape précédente de l'agent dispersant (composé « d ») et agitation
c) mélange des composés « c » et « e », et
d) mélange entre le mélange obtenu à l'étape b) et le mélange obtenu à l'étape c) (ce mélange pouvant s'effectuer par addition du mélange obtenu à l'étape c) dans le mélange obtenu à l'étape b, ou addition du mélange obtenu à l'étape b dans le mélange obtenu à l'étape c)), et agitation, et
e) obtention d'une encre.

L'encre ainsi obtenue pourra être utilisée directement ou bien diluée afin d'obtenir les propriétés souhaitées.

Un avantage additionnel de l'encre selon la présente invention réside dans le fait que sa préparation peut être effectuée à des conditions de pression et/ou de température non contraignantes, par exemple à des conditions de pression et/ou de température proches ou identiques aux conditions normales ou ambiantes. Il est préférable de rester à des valeurs situées à moins de 40% des valeurs des conditions normales ou ambiantes de pression et/ou de température. Par exemple, la Demanderesse a constaté qu'il était préférable de maintenir les conditions de pression et/ou de température durant la préparation de l'encre à des valeurs oscillant au maximum de 30%, de préférence de 15% autour des valeurs des conditions normales ou ambiantes. Un contrôle de ces conditions de pression et/ou de température peut donc être avantageusement inclus dans le dispositif de préparation de l'encre de manière à remplir ces conditions.

Cet avantage lié à une préparation de l'encre dans des conditions non contraignantes se traduit bien évidemment également par une utilisation facilitée des dites encres.
Selon un mode d'exécution de la présente invention, l'encre peut avantageusement être utilisée dans toute méthode d'impression, en particulier dans les méthodes d'impressions suivante : jet d'encre, spray, sérigraphie, héliogravure, flexographie, doctor blade, spin coating, et slot die coating.

La présente invention se rapporte donc également à une utilisation des dites encres dans les domaines dits de la « sécurité », du photovoltaïque, des capteurs (par exemple des capteurs de gaz), des dalles tactiles, des biocapteurs, et des technologies sans contact (« contactless technologies »).

Il est donc évident pour l'homme de l'art que la présente invention permet des modes de réalisation sous de nombreuses autres formes spécifiques sans pour autant s'éloigner du domaine d'application de l'invention tel que revendiqué. Par conséquent, les présents modes de réalisation doivent être considérés à titre d'illustration mais peuvent être modifiés dans le domaine défini par la portée des revendications jointes.

Le tableau ci-dessous reprend deux compositions d'encre selon la présente invention. Les types de composés « a », « b », « c » et « d » sont indiqués dans le tableau ainsi que leur concentration en poids pour chacune des compositions. Les nanoparticules d'oxyde de zinc utilisées pour les deux compositions sont identiques et ont été obtenues en suivant l'exemple de synthèse particulier décrit dans le texte ci-dessus. Les dites nanoparticules d'oxyde de zinc sont caractérisées par une morphologie sphérique et par une teneur résiduelle en ligand acétate de 9,5% en poids. Pour la présente invention et les revendications qui suivent le pourcentage en poids du compose « a » est calculé sur la base du poids des nanoparticules avec leurs ligands.

On peut aussi apercevoir dans la dernière ligne du tableau la valeur de la propriété de viscosité des encres. Ces valeurs ont été mesurées conformément à la méthode décrite ci-dessus dans la description.

Des études de distribution de tailles de particules ont également été effectuées pour ces deux compositions d'encres (ZnO5F24 et ZnO5F33).

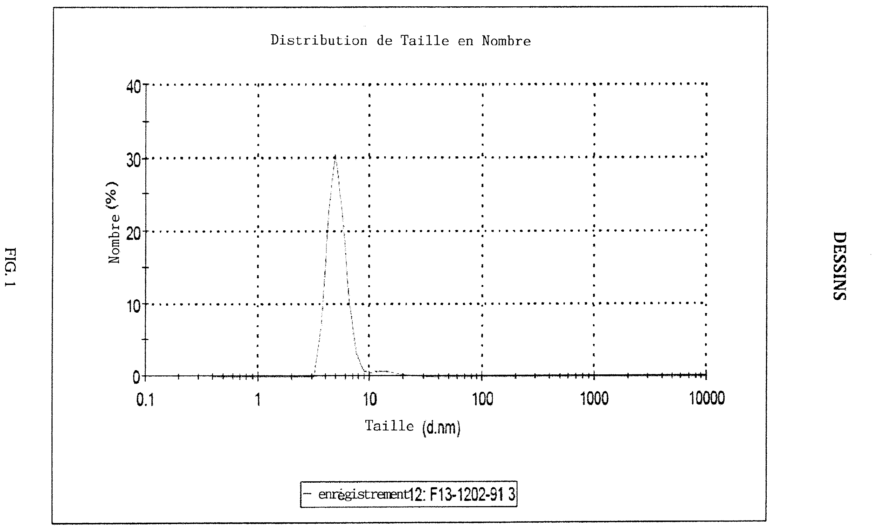

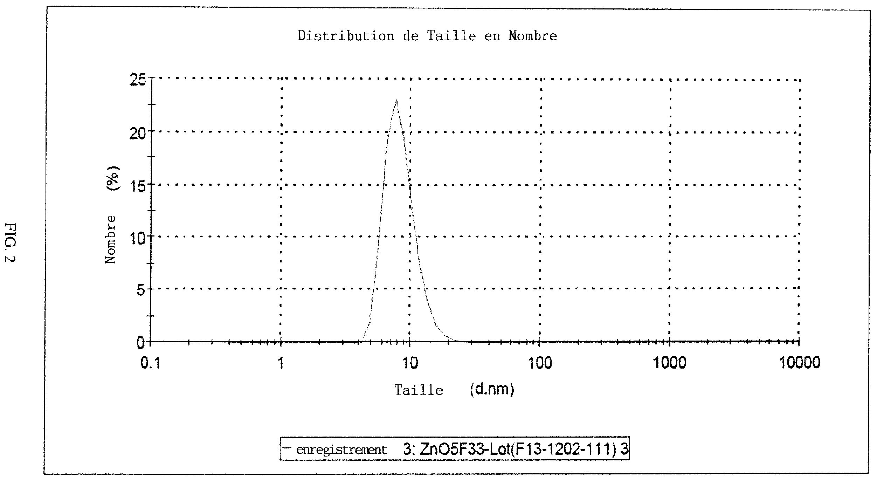

Les courbes correspondantes sont illustrées dans les figures 1 et 2.

Ces mesures ont été effectuées au moyen d'un appareil de type Nanosizer S de Malvern selon les caractéristiques suivantes :
- Diamètre hydrodynamique : environ 10 nm
- Méthode de mesure DLS :
- Type de cuve : verre optique
- Matériel : ZnO
- Température : 20.0°C
- Viscosité :28 cP pour l'encre ZnO5F24 et 10,5 cP pour l'encre ZnO5F33 (par défaut, la viscosité est ajustée en fonction de la viscosité réelle mesurée)
- Indice de réfraction : 1,464. pour l'encre ZnO5F24 et 1,434 pour l'encre ZnO5F33.

Les valeurs de D50 des encres sont respectivement de 5nm pour l'encre ZnO5F24 et de 9 nm pour l'encre ZnO5F33. Selon une variante de réalisation de la présente invention, les encres ont un D50 inférieur à 20 nm et/ou, de préférence, supérieur à 3 nm.

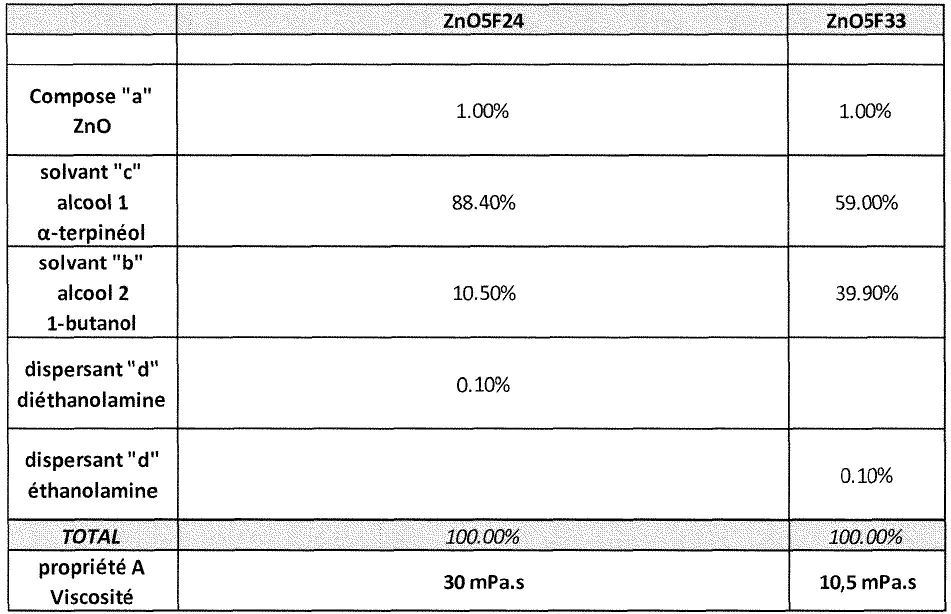

Enfin, une comparaison de mesure de propriété de fluorescence a été effectuée respectivement sur les nanoparticules d'oxyde de zinc et sur la composition d'encre correspondant à la première formulation d'encre du tableau (ZNO5F24). Cette mesure a été effectuée au moyen spectrophotomètre de type Clarian Cary Eclipse dans les conditions indiquées ci-après
Méthode de fluorescence
Appareil : Cary Eclipse de Clarian
Mode : Emission
Longueur d'onde d'excitation : 330 nm
Start : 380 nm
Stop : 880 nm
Excitation slit : 5
Emission slit : 5
Filtre : Auto

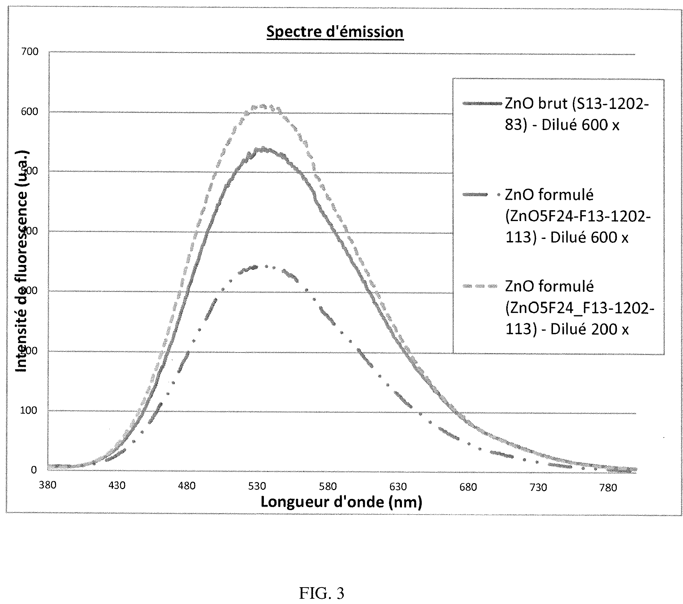

Les mesures correspondantes sont reprises dans la figure 3 ci-après. On peut y apercevoir une conservation de propriété de fluorescence des encres selon la présente invention ce qui les rend particulièrement intéressantes pour tous les domaines dits de «sécurité ».

## Revendications

1. Composition d'encre comprenant
a. un composé « a » consistant en des nanoparticules conductrices et/ou semi-conductrices qui consistent en des oxydes métalliques et qui contiennent de 5 % à 15% en poids de ligands acétates,
b. un composé « b » consistant en un solvant alcool sélectionné parmi les alcools monohydriques aliphatiques ou leurs mélanges,
c. un composé « c » consistant en un co-solvant alcool différent du composé « b » et sélectionné parmi les alcools monohydriques insaturés ou leurs mélanges,
d. un composé « d » consistant en un dispersant, et
e. un composé « e » optionnel consistant en un épaississant ou stabilisant.

2. Composition d'encre selon la revendication précédente **caractérisée par** une viscosité comprise entre 1 et 500 mPa.s.

3. Composition d'encre selon la revendication précédente **caractérisée par** une viscosité comprise entre 1 et 50 mPa.s, par exemple entre 8 et 40 mPa.s.

4. Composition d'encre selon l'une quelconque des revendications précédentes **caractérisée en ce que** les nanoparticules consistent en des nanoparticules d'oxyde de zinc.

5. Composition d'encre selon la revendication précédente **caractérisée en ce que** les nanoparticules sont des nanoparticules d'oxyde de zinc synthétisées par synthèse chimique.

6. Composition d'encre selon l'une quelconque des revendications précédentes **caractérisée en ce que** les nanoparticules contiennent entre 7 et 14% en poids de ligands acétates, par exemple entre 8 et 12% en poids de ligands acétates.

7. Composition d'encre selon l'une quelconque des revendications précédentes **caractérisée en ce que** le composé « b » est sélectionné parmi les alcools monohydriques aliphatiques paraffiniques primaires ayant moins de 10 atomes de carbone ; de préférence parmi l'éthanol, l'isopropanol et/ou le butanol ; de préférence le n-butanol.

8. Composition d'encre selon l'une quelconque des revendications précédentes **caractérisée en ce que** le composé « c » est sélectionné parmi les alcools terpéniques, de préférence le terpinéol, de préférence l'alpha-terpinéol.

9. Composition d'encre selon l'une quelconque des revendications précédentes **caractérisée en ce que** le composé « d » est sélectionné parmi les familles des alcool-amines et des polyalcools, de préférence parmi la diméthanolamine, la diéthanolamine et/ou l'éthanolamine et/ou leur mélange ; l'éthylène glycol, le diéthylène glycol, le propylène glycol et/ou leur mélange.

10. Composition d'encre selon l'une quelconque des revendications précédentes **caractérisée en ce que** le composé « e » est présent et est sélectionné parmi les alkyle-cellulose, de préférence l'éthylcellulose, et les urées modifiées, de préférence les polyurées, et/ou leurs mélanges.

11. Composition d'encre selon l'une quelconque des revendications précédentes comprenant
• un composé «a» dans une teneur comprise entre 0,1 et 15% en poids, de préférence entre 0,5 et 8 % en poids, par exemple entre 0,5 et 2 % en poids,
• un composé « b » dans une teneur comprise entre 9 et 99 % en poids, de préférence entre 9 et 50 % en poids,
• un composé « c » dans une teneur comprise entre 0,5 et 90 % en poids, de préférence entre 50 et 90 % en poids,
• un composé « d » dans une teneur inférieure à 5 % en poids, de préférence entre 0,05 et 2 % en poids, et
• un composé « e » optionnel dans une teneur inférieure à 4 % en poids, de préférence entre 0,5 et 2 % en poids.

## Patentansprüche

1. Tintenzusammensetzung, enthaltend
a. eine Verbindung "a", bestehend aus leitenden und/oder halbleitenden Nanoteilchen, die aus Metalloxiden bestehen und die 5 bis 15 Gew.-% Acetat-Liganden umfassen,
b. eine Verbindung "b", bestehend aus einem Alkohol-Lösungsmittel, das aus den aliphatischen einwertigen Alkoholen oder ihren Mischungen ausgewählt ist,
c. eine Verbindung "c", bestehend aus einem Alkohol-Cosolvens, das von Verbindung "b" verschieden ist und aus den ungesättigten einwertigen Alkoholen oder ihren Mischungen ausgewählt ist,
d. eine Verbindung "d", bestehend aus einem Dispergiermittel, und
e. eine fakultative Verbindung "e", bestehend aus einem Verdicker oder Stabilisator.

2. Tintenzusammensetzung nach dem vorhergehenden Anspruch, **gekennzeichnet durch** eine Viskosität zwischen 1 und 500 mPa.s.

3. Tintenzusammensetzung nach dem vorhergehenden Anspruch, **gekennzeichnet durch** eine Viskosität zwischen 1 und 50 mPa.s, beispielsweise zwischen 8 und 40 mPa.s.

4. Tintenzusammensetzung nach einem der vorhergehenden Ansprüche, **dadurch gekennzeichnet, dass** die Nanoteilchen aus Zinkoxid-Nanoteilchen bestehen.

5. Tintenzusammensetzung nach dem vorhergehenden Anspruch, **dadurch gekennzeichnet, dass** es sich bei den Nanoteilchen um durch chemische Synthese synthetisierte Zinkoxid-Nanoteilchen handelt.

6. Tintenzusammensetzung nach einem der vorhergehenden Ansprüche, **dadurch gekennzeichnet, dass** die Nanoteilchen zwischen 7 und 14 Gew.-% Acetat-Liganden, beispielsweise zwischen 8 und 12 Gew.-%, Acetat-Liganden, enthalten.

7. Tintenzusammensetzung nach einem der vorhergehenden Ansprüche, **dadurch gekennzeichnet, dass** Verbindung "b" aus den primären paraffinischen aliphatischen einwertigen Alkoholen mit weniger als 10 Kohlenstoffatomen, vorzugsweise aus Ethanol, Isopropanol und/oder Butanol, vorzugsweise n-Butanol, ausgewählt ist.

8. Tintenzusammensetzung nach einem der vorhergehenden Ansprüche, **dadurch gekennzeichnet, dass** Verbindung "c" aus Terpen-Alkoholen, vorzugsweise Terpineol, vorzugsweise alpha-Terpineol, ausgewählt ist.

9. Tintenzusammensetzung nach einem der vorhergehenden Ansprüche, **dadurch gekennzeichnet, dass** Verbindung "d" aus den Familien der Alkoholamine und der Polyalkohole, vorzugsweise aus Dimethanolamin, Diethanolamin und/oder Ethanolamin und/oder ihrer Mischung; Ethylenglykol, Diethylenglykol, Propylenglykol und/oder ihrer Mischung ausgewählt ist.

10. Tintenzusammensetzung nach einem der vorhergehenden Ansprüche, **dadurch gekennzeichnet, dass** Verbindung "e" vorliegt und aus den Alkylcellulosen, vorzugsweise Ethylcellulose, und den modifizierten Harnstoffen, vorzugsweise den Polyharnstoffen, und/oder ihren Mischungen ausgewählt ist.

11. Tintenzusammensetzung nach einem der vorhergehenden Ansprüche, umfassend
• eine Verbindung "a" in einem Gehalt zwischen 0,1 und 15 Gew.-%, vorzugsweise zwischen 0,5 und 8 Gew.-%, beispielsweise zwischen 0,5 und 2 Gew.-%,
• eine Verbindung "b" in einem Gehalt zwischen 9 und 99 Gew.-%, vorzugsweise zwischen 9 und 50 Gew.-%,
• eine Verbindung "c" in einem Gehalt zwischen 0,5 und 90 Gew.-%, vorzugsweise zwischen 50 und 90 Gew.-%,
• eine Verbindung "d" in einem Gehalt von weniger als 5 Gew.-%, vorzugsweise zwischen 0,05 und 2 Gew.-%, und
• eine fakultative Verbindung "e" in einem Gehalt von weniger als 4 Gew.-%, vorzugsweise zwischen 0,5 und 2 Gew.-%.

## Claims

1. Ink composition comprising
a. a compound "a" consisting of conductive and/or semiconductive nanoparticles which consist of metal oxides and which contain from 5% to 15% by weight of acetate ligands,
b. a compound "b" consisting of an alcohol solvent selected from aliphatic monohydric alcohols or mixtures thereof,
c. a compound "c" consisting of an alcohol co-solvent different from the compound "b" and selected from unsaturated monohydric alcohols or mixtures thereof,
d. a compound "d" consisting of a dispersing agent, and
e. an optional compound "e" consisting of a thickener or stabilizer.

2. Ink composition according to the preceding claim, **characterized by** a viscosity of between 1 and 500 mPa.s.

3. Ink composition according to the preceding claim, **characterized by** a viscosity of between 1 and 50 mPa.s, for example between 8 and 40 mPa.s.

4. Ink composition according to any one of the preceding claims, **characterized in that** the nanoparticles consist of zinc oxide nanoparticles.

5. Ink composition according to the preceding claim, **characterized in that** the nanoparticles are zinc oxide nanoparticles synthesized by chemical synthesis.

6. Ink composition according to any one of the preceding claims, **characterized in that** the nanoparticles contain between 7% and 14% by weight of acetate ligands, for example between 8% and 12% by weight of acetate ligands.

7. Ink composition according to any one of the preceding claims, **characterized in that** the compound "b" is selected from primary paraffinic aliphatic monohydric alcohols having less than 10 carbon atoms; preferably from ethanol, isopropanol and/or butanol; preferably n-butanol.

8. Ink composition according to any one of the preceding claims, **characterized in that** the compound "c" is selected from terpene alcohols, preferably terpineol, preferably alpha-terpineol.

9. Ink composition according to any one of the preceding claims, **characterized in that** the compound "d" is selected from the families of alcohol-amines and of polyalcohols, preferably from dimethanolamine, diethanolamine and/or ethanolamine and/or a mixture thereof; ethylene glycol, diethylene glycol, propylene glycol and/or a mixture thereof.

10. Ink composition according to any one of the preceding claims, **characterized in that** the compound "e" is present and is selected from alkyl celluloses, preferably ethylcellulose, and modified ureas, preferably polyureas, and/or mixtures thereof.

11. Ink composition according to any one of the preceding claims, comprising:
• a compound "a" in a content of between 0.1% and 15% by weight, preferably between 0.5% and 8% by weight, for example between 0.5% and 2% by weight,
• a compound "b" in a content of between 9% and 99% by weight, preferably between 9% and 50% by weight,
• a compound "c" in a content of between 0.5% and 90% by weight, preferably between 50% and 90% by weight,
• a compound "d" in a content of less than 5% by weight, preferably between 0.05% and 2% by weight, and
• an optional compound "e" in a content of less than 4% by weight, preferably between 0.5% and 2% by weight.
